# EUROPEAN PATENT SPECIFICATION

(11) **EP 1 688 309 B1**
(45) Date of publication and mention of the grant of the patent: **26.08.2009**
(21) Application number: 05100793.8
(22) Date of filing: 04.02.2005
(51) Int. Cl.: B60R 16/02

(54) **Presentation of visual informations in a vehicle and method**
Darstellung visueller Informationen in einem Fahrzeug und Verfahren
Présentation des informations visuelles dans un véhiclue et procédé

(43) Date of publication of application: 09.08.2006
(73) Proprietor: Scania CV AB (publ), 151 87 Södertälje (SE)
(72) Inventor: Benkö, Gabor, S-151 48 Södertälje (SE)

(56) References cited:
- US-B1- 6 441 510

## Description

### Technical field

The present invention relates generally to presentation of visual indications in motor vehicles, which is efficient from a manufacturing point-of-view. More particularly the invention relates to a motor vehicle according to the preamble of claim 1 and a method according to the preamble of claim 7. The invention also relates to a computer program according to claim 10 and a computer readable medium according to claim 11.

### Background art

Various solutions are known for accomplishing a combined customization flexibility and scale of economics when manufacturing motor vehicles. For example, the document US, 6,441,510 describes a reconfigurable modular instrument cluster arrangement, wherein an instrument panel can be configured relatively late in the vehicle assembly process. Here, a universal connector arrangement and a plurality of multiplexing links render it possible to accomplish a wide variety of panel designs without customizing the electrical system and the wiring system.

The document US, 2003/0037427 discloses a vehicle body manufacturing process according to which a common, standardized interface system is established for attaching vehicle bodies to vehicle chassis, wherein connection components are arranged in a predetermined spatial relationship on the bodies and chassis to facilitate any selective attachment of any one of a plurality of different body types to a particular chassis.

Thus, various vehicle functions may be custom made relatively cost efficiently. Some efficiency problems remain unresolved in the area of vehicle customization though. In particular types of vehicles, such as busses, numerous vehicle functions which are performed by the vehicle's body should preferably be reflected by one or more visual indications on the instrument panel. Door opening/closing operations and manoeuvring of wheel chair lifts for handicapped constitute examples of such functions. However, a panel control unit (and sometimes also the actual instrument panel display device) is normally assembled on, and therefore logically belongs to, the chassis. In many cases, the chassis and the body are built separately, perhaps even by different companies and/or production units. Thus, in order to accomplish relevant visual indications on the instrument panel in respect of any body functions, the body builder and the chassis builder need to coordinate applicable parameters of these body functions. Additionally, since each vehicle may be individually custom made to have particular body functions as requested by the customer, this coordination may be a comparatively complex and tedious task.

### Disclosure of the invention

The object of the present invention is therefore to provide a solution, which alleviates the above-mentioned problems, and thus enables an efficient and reliable overall manufacturing process for both the chassis builder and body builder that allows a large degree of freedom in terms of customization of the body functionality.

According to one aspect of the invention, the object is achieved by the initially described motor vehicle, wherein the chassis includes a message filtering unit, which is adapted to receive messages representing at least a sub-group of the body control messages; and determines whether a particular received message represents a panel display message. If a particular received message is found to represent a panel display message, the message filtering unit is adapted to forward this message to the panel control unit for production of at least one display control message.

An important advantage attained by this vehicle design is that, the body builder can chose to implement any body related function, which is reflected by a message known by the message filtering unit without having to inform the chassis builder thereof. Still any relevant indication will be shown on the vehicle's instrument panel display. Naturally, this saves a massive amount of time and effort in relation to the previous solutions. Only in the rare case that the body builder intends to implement a body related function, which yet lacks a known equivalent message in the message filtering unit, and if this function also is to be indicated on the instrument panel display, the chassis builder needs to be informed of the function and its applicable parameters.

According to one embodiment of this aspect of the invention, the filtering unit includes a first complete listing over a set of potential panel display messages. The filtering unit is also adapted to determine whether any received message is a panel display message based on the first complete listing. Thus, the set of potential panel display messages is readily accessible in the chassis, and the listing may be conveniently updated whenever necessary.

According to another embodiment of this aspect of the invention, the panel control unit includes a specific listing over panel display messages, which are to cause visual indications on the display device. Additionally, the panel control unit is adapted to produce the display control messages based on the specific listing. Hence, in similarity with the first complete listing in the filtering unit, also the specific listing is thereby made readily accessible and possible to update effortlessly.

According to yet another embodiment of this aspect of the invention, the body includes a gateway control unit, which is adapted to select the sub-group of the body control messages from the body control messages communicated on at least one communication line in the body. The gateway control unit is then adapted to forward any messages that belong to the selected sub-group to the filtering unit. This design is desirable because thereby only chassis related body messages will be passed on to the chassis.

According to still another embodiment of this aspect of the invention, the panel control unit and the filtering unit are adapted to exchange a first type of messages over a first communication bus that has a first format, which is different from a second format of the at least one communication line over which the body control messages are communicated in the body. Furthermore, the gateway control unit is adapted to convert any received message belonging to the selected sub-group into an equivalent body control message on the first communication bus. Thereby, a message conversion function is accomplished between the body and the chassis.

According to another embodiment of this aspect of the invention, the gateway control unit includes a second complete listing whose content is equivalent to the content of the first complete listing. The gateway control unit is then adapted to select the sub-group of messages based on the second complete listing. Consequently, the chassis builder and the body builder each have access to a copy of the complete listing, namely the first and the second complete listing respectively. As a result, much of the coordination between the body builder and the chassis builder that was necessary previously can be omitted, since each party may consult its own version of the complete listing.

According to another aspect of the invention, the object is achieved by the initially described method, wherein messages are received that represent at least a sub-group of the body control messages. The method also involves determining whether a particular received message represents a panel display message; and if so, this message is forwarded to the panel control unit for production of at least one display control message.

This interaction between the body and the chassis allows the above-described vehicle design, which in turn, enables the body builder to implement any body related function reflected by a message known by the message filtering unit without having to inform the chassis builder thereof, and still any relevant indications will be shown on the vehicle's instrument panel display.

According to one embodiment of this aspect of the invention, it is determined whether the received message represents a panel display message based on a first complete listing, which includes a set of potential panel display messages.

According to one embodiment of this aspect of the invention, the method involves receiving a panel display message in the panel control unit; and comparing the received panel display message with a specific listing over panel display messages corresponding to body related functions implemented in the body that are to be represented by means of visual indications on the display device. If a match is found in the specific listing, at least one display control message is produced in response to the received panel display message. Thus, a relevant translation function between the body and the chassis is attained.

According to a further aspect of the invention the object is achieved by a computer program directly loadable into the internal memory of a computer. The computer program contains software for controlling the above proposed method when said program is run on a computer.

According to another aspect of the invention the object is achieved by a computer readable medium, having a program recorded thereon, where the program is to make a computer control the above proposed method.

### Brief description of the drawings

The present invention is now to be explained more closely by means of embodiments, which are disclosed as examples, and with reference to the attached drawings.

Figure 1 schematically illustrates the chassis and the body of a motor vehicle according to one embodiment of the invention, and

Figure 2 shows a flow diagram, which illustrates the general method performed by the chassis units according to the invention.

### Mode(s) for carrying out the invention

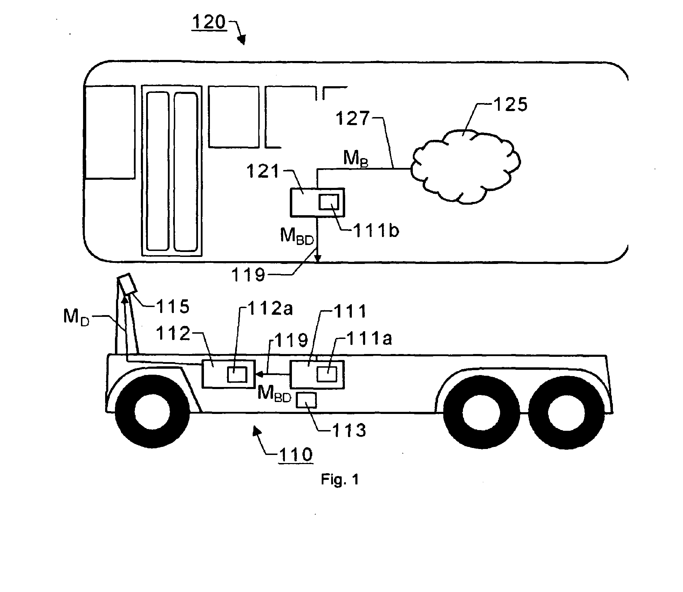

Figure 1 shows a schematic chassis 110 and a schematic body 120 of a motor vehicle according to one embodiment of the invention. The body 120 includes at least one body control unit, here represented by a specific unit 121 and a general network 125. Each of these units is adapted to control at least one body related function in response to body control messages M_{B} being communicated over at least one communication line 127 in the body 120. The body related functions may pertain to control of the vehicle's doors, lifts, ventilation system, cabin temperature etc.

The chassis 110, in turn, includes a panel control unit 112 that is adapted to control a display device 115 for presenting visual indications, typically intended for a driver of the vehicle. The panel control unit 112 generates display control messages M_{D} for accomplishing such display indications. The display device 115 shows chassis related information, such as velocity, motor speed and brakes statuses. According to the invention, however, the display device 115 also shows data, which describes certain parameters of the body related functions. To this end, the chassis 110 includes a message filtering unit 111, which is adapted to receive messages representing at least a sub-group of the body control messages M_{B}. The message filtering unit 111 then determines whether a particular received message represents a panel display message M_{BD}; and if so, the unit 111 forwards the particular received message M_{BD} to the panel control unit 112 for production of at least one relevant display control message M_{D} , which ultimately results in one or more indications on the display device 115.

Preferably, the filtering unit 111 contains, or is associated with, a first complete listing 111a over a set of potential panel display messages M_{BD}, i.e. all the panel display messages M_{BD} that may occur in any configuration of a relevant body 120 for the chassis 110. The filtering unit 111 uses this first complete listing 111 a to determine whether a received message is a panel display message M_{BD} or not.

In addition, according to one embodiment of the invention, the panel control unit 112 includes a specific listing 112a over panel display messages M_{BD}, which ae to cause visual indications on the display device 115 of the particular vehicle. Thus, the specific listing 112a contains a compilation of those panel display messages M_{BD} that are relevant for the specific body 120 of the vehicle in question. Naturally, the panel control unit 112 is adapted to produce the display control messages M_{D} for the display device 115 based on the specific listing 112a.

The panel control unit 112 and the filtering unit 111 are preferably connected to a first communication bus 119, for instance of CAN-type (Con-troller Area Network). However, of course, other vehicle adapted bus formats are also conceivable, such as Time Triggered CAN (TTCAN), FlexRay, Media Oriented System Transport (MOST) and ByteFlight. By connecting control units to busses of any of these formats, efficient and flexible network solutions can be accomplished for controlling various kinds of units and processes in motor vehicles, for instance trucks, busses and passenger cars. A CAN, or a similar network, renders it possible to accomplish a very large number of vehicle functions based on relatively few ECUs (Electronic Control Unit). Namely, by combining resources from two or more ECUs a flexible and efficient over-all vehicular design is obtained. Moreover, multiple networks in a vehicle may be interconnected, so that ECUs belonging to different networks in the vehicle may exchange information. Typically, an ECU is used also to accomplish this bridging between the networks.

Nevertheless, the at least one communication line 127 over which the body control messages M_{B} are communicated in the body 120, may be different from the format of the first communication bus 119. Therefore, according to one embodiment of the invention, the body 120 includes a gateway control unit 121, which is adapted to convert messages on the at least one communication line 127 into equivalent messages on the first communication bus 119. For example, one or more of the at least one communication line 127 may have a multiplexed format, and the gateway control unit 121 may be adapted to convert data from this format into CAN-data according to the J1939 standard.

Moreover, the gateway control unit 121 is preferably adapted to select the sub-group of the body control messages M_{B} from the body control messages M_{B} that are communicated on the at least one communication line 127 in the body 120, and forward such messages to the filtering unit 111. Naturally, the forwarding process performed by the gateway control unit 121 involves converting any received message belonging to the selected sub-group into an equivalent body control message M_{BD} on the first communication bus 119. Furthermore, the gateway control unit 121 preferably contains, or is associated with, a second complete listing 111 b whose contents is equivalent to the contents of the first complete listing 111a of the filtering unit 111. The gateway control unit 121 then selects the sub-group of messages based on the second complete listing 111 b.

The above-described method performed by the chassis units 111 and 112 is preferably controlled by a computer program, which is loaded into a memory unit 113, either located in one of the units 111 and 112, or in a separate processing module.

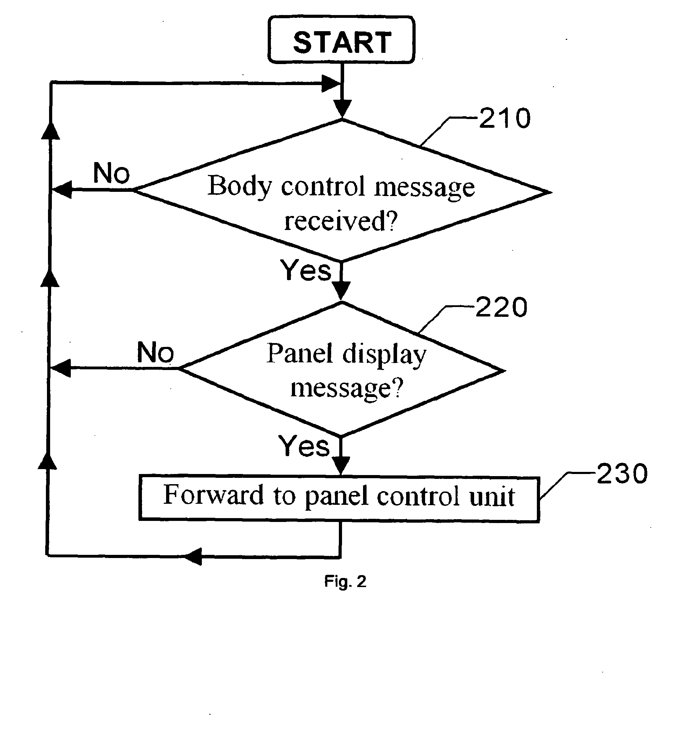

In order to sum up the proposed method, reference is now made to the flow diagram of figure 2.

Here, a first step 210 checks if a body control message M_{B} has been received in the filtering unit 111 (i.e. a message representing the above-mentioned sub-group of the body control messages), and if not, the procedure loops back and stays in the step 210. Otherwise, a step 220 follows, which investigates whether the body control message M_{B} represents a message that should generate a panel display message M_{BD}. If this is not the case, the procedure loops back to the step 210. However, if a panel display message M_{BD} is to be generated, a step 230 forwards the message to the panel control unit 112. Then, the procedure loops back to the step 210.

When the panel control unit 112 receives the panel display message M_{BD} this unit 112 preferably compares the received message M_{BD} with the above-mentioned specific listing 112a over panel display messages that correspond to body related functions implemented in the body 120, which are to be represented by means of visual indications on the display device 115. If, in this comparison, a match is found, the panel control unit 112 produces at least one display control message M_{D} in response to the received panel display message M_{BD} .

All of the process steps, as well as any sub-sequence of steps, described with reference to the figure 2 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. A motor vehicle comprising a chassis (110) and a body (120), the chassis (110) including a panel control unit (112) adapted to control a display device (115) for presenting visual indications in response to display control messages (M_{D}) originated by the panel control unit (112); and the body (120) including at least one body control unit (121, 125) adapted to control at least one body related function in response to body control messages (M_{B}),
**characterized in that** the chassis (110) comprises a message filtering unit (111) adapted to:
receive messages representing at least a sub-group of the body control messages (M_{B});
determine whether a particular received message represents a panel display message (M_{BD}); and if so
forward the particular received message (M_{BD}) to the panel control unit (112) for production of at least one display control message (M_{D}).

2. The motor vehicle according to claim 1, **characterized in that** the filtering unit (111) comprises a first complete listing (111 a) over a set of potential panel display messages (M_{BD}), and the filtering unit (111) is adapted to determine whether any received message is a panel display message (M_{BD}) based on the first complete listing (111 a).

3. The motor vehicle according to claim 2, **characterized in that** the panel control unit (112) comprises a specific listing (112a) over panel display messages (M_{BD}) which are to cause visual indications on the display device (115), and the panel control unit (112) is adapted to produce the display control messages (M_{D}) based on the specific listing (112a).

4. The motor vehicle according to any one of the claims 2 or 3, **characterized in that** the body (120) comprises a gateway control unit (121) adapted to:
select the sub-group of the body control messages (M_{B}) from the body control messages (M_{B}) communicated on at least one communication line (127) in the body (120), and
forward messages belonging to the selected sub-group to the filtering unit (111).

5. The motor vehicle according to claim 4, **characterized in that** the panel control unit (112) and the filtering unit (111) are adapted to exchange a first type of messages over a first communication bus (119) having a first format which is different from a second format of the at least one communication line (127) over which the body control messages (M_{B}) are communicated in the body (120), and the gateway control unit (121) is adapted to convert any received message belonging to the selected sub-group into an equivalent body control message (M_{BD}) on the first communication bus (119).

6. The motor vehicle according to any one of the claims 4 or 5, **characterized in that** the gateway control unit (121) comprises a second complete listing (111b) having a contents equivalent to a contents of the first complete listing (111a), and the gateway control unit (121) is adapted to select the sub-group of messages based on the second complete listing (111 b).

7. A method of presenting visual indications on a display device (115) of a motor vehicle comprising a chassis (110) and a body (120), the body (120) including at least one body control unit (121, 125) adapted to control at least one body related function in response to body control messages (M_{B}), the method comprising generating display control messages (M_{D}) in a panel control unit (112) of the chassis (110), and the display control messages (M_{D}) are adapted to cause the visual indications, **characterized by**
receiving messages representing at least a sub-group of the body control messages (M_{B});
determining whether a particular received message represents a panel display message (M_{BD}); and if so
forwarding the particular received message to the panel control unit (112) for production of at least one display control message (M_{D}).

8. The method according to claim 7, **characterized by** the determining whether the received message represents a panel display message (M_{BD}) being based on a first complete listing (111a) which includes a set of potential panel display messages (M_{BD}).

9. The method according to claim 8, **characterized by**
receiving a panel display message (M_{BD}) in the panel control unit (112);
comparing the received panel display message (M_{BD}) with a specific listing (112a) over panel display messages (M_{BD}) corresponding to body related functions implemented in the body (120) that are to be represented by means of visual indications on the display device (115); and if a match is found in the specific listing (112a)
producing at least one display control message (M_{D}) in response to the received panel display message (M_{BD}).

10. A computer program directly loadable into the internal memory (113) of a computer, comprising software for controlling the steps of any of the claims 7 to 9 when said program is run on the computer.

11. A computer readable medium (113), having a program recorded thereon, where the program is to make a computer control the steps of any of the claims 7 to 9.

## Patentansprüche

1. Fahrzeug mit einem Chassis (110) und einem Aufbau (120), wobei das Chassis (110) eine Panel-Steuereinheit (112) aufweist, die dazu geeignet ist, eine Anzeigevorrichtung (115) zum Präsentieren von sichtbaren Anzeigen in Antwort auf durch die Panel-Steuereinheit (112) erzeugte Anzeige-Steuersignale (M_{D}) zu steuern; und wobei der Aufbau (120) wenigstens eine Aufbau-Steuereinheit (121, 125) aufweist, die dazu geeignet ist, wenigstens eine dem Aufbau zugehörige Funktion in Antwort auf Aufbau-Steuersignale (M_{B}) zu steuern,
**dadurch gekennzeichnet, dass** das Chassis (110) eine Signalfiltereinheit (111) aufweist, die dazu geeignet ist:
Signale zu empfangen, die zumindest eine Teilgruppe der Aufbau-Steuersignale (M_{B}) darstellen;
zu bestimmen, ob ein bestimmtes empfangenes Signal ein Panel-Anzeigesignal (M_{BD}) darstellt; und wenn dies der Fall ist,
das bestimmte empfangene Signal (M_{BD}) zu der Panel-Steuereinheit (112) zum Erzeugen von wenigstens einem Anzeige-Steuersignal (M_{D}) zu senden.

2. Fahrzeug nach Anspruch 1,
**dadurch gekennzeichnet, dass** die Filtereinheit (111) eine erste vollständige Liste (111a) über eine Reihe von möglichen Panel-Anzeigesignalen (M_{BD}) aufweist, und dass die Filtereinheit (111) dazu geeignet ist, basierend auf der ersten vollständigen Liste (111a) zu bestimmen, ob ein empfangenes Signal ein Panel-Anzeigesignal (M_{BD}) ist.

3. Fahrzeug nach Anspruch 2,
**dadurch gekennzeichnet, dass** die Panel-Steuereinheit (112) eine spezifische Liste (112a) über Panel-Anzeigesignale (M_{BD}) aufweist, die sichtbare Anzeigen auf der Anzeigevorrichtung (115) bewirken, und dass die Panel-Steuereinheit (112) dazu geeignet ist, basierend auf der spezifischen Liste (112a) die Anzeige-Steuersignale (M_{D}) zu erzeugen.

4. Fahrzeug nach einem der Ansprüche 2 oder 3,
**dadurch gekennzeichnet, dass** der Aufbau (120) eine Schnittstellen-Steuereinheit (121) aufweist, die dazu geeignet ist:
die Teilgruppe der Aufbau-Steuersignale (M_{B}) von den auf wenigstens einem Kommunikationsweg (127) im Aufbau (120) übertragenen Aufbau-Steuersignalen (M_{B}) auszuwählen, und
zu der ausgewählten Teilgruppe zugehörige Signale zu der Filtereinheit (111) zu senden.

5. Fahrzeug nach Anspruch 4,
**dadurch gekennzeichnet, dass** die Panel-Steuereinheit (112) und die Filtereinheit (111) dazu geeignet sind, einen ersten Signaltyp über einen ersten Kommunikationsbus (119) auszutauschen, der ein erstes Format aufweist, das sich von einem zweiten Format des wenigstens einen Kommunikationswegs (127), über den die Aufbau-Steuersignale (M_{B}) im Aufbau (120) übertragen werden, unterscheidet, und dass die Schnittstellen-Steuereinheit (121) dazu geeignet ist, jedes zu der ausgewählten Teilgruppe zugehörige empfangene Signal in ein entsprechendes Aufbau-Steuersignal (M_{BD}) auf dem ersten Kommunikationsbus (119) umzuwandeln.

6. Fahrzeug nach einem der Ansprüche 4 oder 5,
**dadurch gekennzeichnet, dass** die Schnittstellen-Steuereinheit (121) eine zweite vollständige Liste (111b) mit einem Inhalt entsprechend einem Inhalt der ersten vollständigen Liste (111a) aufweist, und dass die Schnittstellen-Steuereinheit (121) dazu geeignet ist, basierend auf der zweiten vollständigen Liste (111b) die Teilgruppe der Signale auszuwählen.

7. Verfahren zum Präsentieren von sichtbaren Anzeigen auf einer Anzeigevorrichtung (115) eines Fahrzeugs mit einem Chassis (110) und einem Aufbau (120), wobei der Aufbau (120) wenigstens eine Aufbau-Steuereinheit (121, 125) aufweist, die dazu geeignet ist, wenigstens eine dem Aufbau zugehörige Funktion in Antwort auf Aufbau-Steuersignale (M_{B}) zu steuern, wobei das Verfahren umfasst:
Erzeugen von Anzeige-Steuersignalen (M_{D}) in einer Panel-Steuereinheit (112) des Chassis (110), und wobei die Anzeige-Steuersignale (M_{D}) dazu geeignet sind, sichtbare Anzeigen zu bewirken, **gekennzeichnet durch**
Empfangen von Signalen, die zumindest eine Teilgruppe der Aufbau-Steuersignale (M_{B}) darstellen;
Bestimmen, ob ein bestimmtes empfangenes Signal ein Panel-Anzeigesignal (M_{BD}) darstellt; und wenn dies der Fall ist,
Senden des bestimmten empfangenen Signals zu der Panel-Steuereinheit (112) zum Erzeugen von wenigstens einem Anzeige-Steuersignal (M_{D}).

8. Verfahren nach Anspruch 7,
**gekennzeichnet durch** Bestimmen, ob das empfangene Signal ein Panel-Anzeigesignal (M_{BD}) darstellt, das auf einer ersten vollständigen Liste (111a) basiert, die eine Reihe von möglichen Panel-Anzeigesignale (M_{BD}) aufweist.

9. Verfahren nach Anspruch 8,
**gekennzeichnet durch**
Empfangen eines Panel-Anzeigesignals (M_{BD}) in der Panel-Steuereinheit (112); Vergleichen des empfangenen Panel-Anzeigesignals (M_{sD}) mit einer spezifischen Liste (112a) über Panel-Anzeigesignale (M_{BD}), die dem Aufbau zugehörige und im Aufbau (120) ausgeführte Funktionen entsprechen, die mittels sichtbaren Anzeigen auf der Anzeigevorrichtung (115) dargestellt werden sollen; und falls eine Übereinstimmung in der spezifischen Liste (112a) gefunden wird,
Erzeugen wenigstens eines Anzeige-Steuersignals (M_{D}) in Antwort auf das empfangene Panel-Anzeigesignal (M_{BD}).

10. Computerprogramm, das direkt in den internen Speicher (113) eines Computers ladbar ist, umfassend Software zum Steuern der Schritte eines der Ansprüche 7 bis 9, wenn das Programm auf dem Computer ausgeführt wird.

11. Computerlesbares Medium (113) mit einem darauf gespeicherten Programm, wobei das Programm einen Computer veranlasst, die Schritte eines der Ansprüche 7 bis 9 zu steuern.

## Revendications

1. Véhicule à moteur comprenant un châssis (110) et une caisse (120), le châssis (110) comprenant une unité de commande d'afficheur (112) conçue pour commander un dispositif d'affichage (115) pour présenter des indications visuelles en réponse à des messages de commande d'affichage (M_{D}) provenant de l'unité de commande d'afficheur (112) ; et la caisse (120) comprenant au moins une unité de commande de caisse (121, 125) conçue pour commander au moins une fonction liée à la caisse en réponse à des messages de commande de caisse (M_{B}),
**caractérisé en ce que** le châssis (110) comprend un dispositif de filtrage des messages (111) conçu pour :
recevoir des messages représentant au moins un sous-groupe des messages de commande de caisse (M_{B}) ;
déterminer si un message reçu particulier représente un message d'affichage afficheur (M_{BD}) ; et si tel est le cas
transférer le message reçu particulier (M_{BD}) à l'unité de commande d'afficheur (112) pour produire au moins un message de commande d'affichage (M_{D}).

2. Véhicule à moteur selon la revendication 1, **caractérisé en ce que** le dispositif de filtrage (111) comprend une première liste complète (111a) sur un ensemble de messages d'affichage afficheur (M_{BD}) potentiels, et le dispositif de filtrage (111) est conçu pour déterminer si un quelconque message reçu est un message d'affichage afficheur (M_{BD}) en fonction de la première liste complète (111a).

3. Véhicule à moteur selon la revendication 2, **caractérisé en ce que** l'unité de commande d'afficheur (112) comprend une liste spécifique (112a) sur des messages d'affichage afficheur (M_{BD}) qui doivent provoquer des indications visuelles sur le dispositif d'affichage (115), et l'unité de commande d'afficheur (112) est conçue pour produire les messages de commande d'affichage (M_{D}) en fonction de la liste spécifique (112a).

4. Véhicule à moteur selon l'une quelconque des revendications 2 ou 3, **caractérisé en ce que** la caisse (120) comprend un dispositif de commande de passerelle (121) conçu pour :
sélectionner le sous-groupe des messages de commande de caisse (M_{B}) parmi les messages de commande de caisse (M_{B}) communiqués sur au moins une ligne de communication (127) dans la caisse (120), et
transférer les messages appartenant au sous-groupe sélectionné au dispositif de filtrage (111).

5. Véhicule à moteur selon la revendication 4, **caractérisé en ce que** l'unité de commande d'afficheur (112) et le dispositif de filtrage (111) sont conçus pour échanger un premier type de messages sur un premier bus de communication (119) ayant un premier format différent d'un second format de la au moins une ligne de communication (127) sur laquelle les messages de commande de caisse (M_{B}) sont communiqués dans la caisse (120) et le dispositif de commande de passerelle (121) est conçu pour convertir tout message reçu appartenant au sous-groupe sélectionné en un message de commande de caisse (M_{BD}) équivalent sur le premier bus de communication (119).

6. Véhicule à moteur selon l'une quelconque des revendications 4 ou 5, **caractérisé en ce que** le dispositif de commande de passerelle (121) comprend une seconde liste complète (111b) dont le contenu est équivalent au contenu de la première liste complète (111a), et le dispositif de commande de passerelle (121) est conçu pour sélectionner le sous-groupe de messages en fonction de la seconde liste complète (111b).

7. Procédé de présentation d'indications visuelles sur un dispositif d'affichage (115) d'un véhicule à moteur comprenant un châssis (110) et une caisse (120), la caisse (120) comprenant au moins un dispositif de commande de caisse (121, 125) conçu pour commander au moins une fonction liée à la caisse en réponse à des messages de commande de caisse (M_{B}), le procédé comprenant la production de messages de commande d'affichage (M_{D}) dans un unité de commande d'afficheur (112) du châssis (110), et les messages de commande d'affichage (M_{D}) étant conçus pour provoquer des indications visuelles, **caractérisé par**
la réception de messages représentant au moins un sous-groupe des messages de commande de caisse (M_{B}) ;
la détermination de si un message reçu particulier représente un message d'affichage afficheur (M_{BD}) ; et si tel est le cas
le transfert du message reçu particulier au dispositif de commande de unité de commande d'afficheur (112) pour produire au moins un message de commande d'affichage (M_{D}).

8. Procédé selon la revendication 7, **caractérisé en ce qu'**il est déterminé si le message reçu représente un message d'affichage afficheur (M_{BD}) en fonction d'une première liste complète (111a) comprenant un ensemble de messages d'affichage afficheur (M_{BD}) potentiels.

9. Procédé selon la revendication 8, **caractérisé par**
la réception d'un message d'affichage afficheur (M_{BD}) dans l'unité de commande d'afficheur (112) ;
la comparaison du message d'affichage afficheur (M_{BD}) reçu avec une liste spécifique (112a) sur les messages d'affichage afficheur (M_{BD}) correspondant à des fonctions liées à la caisse mises en oeuvre dans la caisse (120) qui doivent être représentées par des moyens d'indication visuelle sur le dispositif d'affichage (115) ; et en cas de découverte d'une correspondance dans la liste spécifique (112a)
la production d'au moins un message de commande d'affichage (M_{D}) en réponse au message d'affichage afficheur (M_{BD}) reçu.

10. Programme informatique pouvant être chargé directement dans la mémoire interne (113) d'un ordinateur, comprenant un logiciel pour contrôler les étapes de l'une quelconque des revendications 7 à 9 lorsque ledit programme est exécuté sur l'ordinateur.

11. Support exploitable sur ordinateur (113), sur lequel est enregistré un programme, ledit programme étant destiné à faire contrôler par un ordinateur les étapes de l'une quelconque des revendications 7 à 9.
